**Europäisches Patentamt**

**European Patent Office**

**Office européen des brevets**

(19)

(11) Veröffentlichungsnummer: **0 287 937**

**A2**

(12) ## EUROPÄISCHE PATENTANMELDUNG

(21) Anmeldenummer: **88105845.7**

(22) Anmeldetag: **13.04.88**

(51) Int. Cl.⁴: **G01P 3/46 , H02K 29/08**

(30) Priorität: **18.04.87 DE 3713305**

(43) Veröffentlichungstag der Anmeldung:
**26.10.88 Patentblatt 88/43**

(84) Benannte Vertragsstaaten:
**AT BE CH DE ES FR GB GR IT LI LU NL SE**

(71) Anmelder: **HELDT & ROSSI**
**SERVOELEKTRONIK GMBH**
**Zeppelinstrasse 40**
**D-7302 Ostfildern 4(DE)**

(72) Erfinder: **Rossi, Lothar**
**In den Steinen 12**
**D-7302 Ostfildern(DE)**

(74) Vertreter: **Otte, Peter, Dipl.-Ing.**
**Tiroler Strasse 15**
**D-7250 Leonberg(DE)**

(54) **Tachogenerator für elektrische Maschinen.**

(57) Bei einem elektrischen Tachogenerator für Drehantriebe, insbesondere für Elektromotoren wird
vorgeschlagen, in axialer Schichtung aufeinanderfolgend einen permanentmagnetischen, drehangetriebenen Rotor mit axial verlaufender, gegliederter
Hauptmagnetisierung und angrenzend zu diesem
mindestens eine Spulenträgerscheibe anzuordnen,
auf welcher Flachspulen mit radial verlaufenden
Hauptwicklungssträngen (Speichenstege) angeordnet
sind. Zur Korrektur der abgegebenen Spannung
hauptsächlich im Dachformverlauf dienen die Speichenstege verbindende peripher verlaufende Basis-
und/oder Verbindungsstege, die einer besonderen
Formgebung unterworfen und ebenfalls im magnetisch aktiven Bereich des Magnetrotors angeordnet
sind. Der Magnetrotor trägt ferner eine Kurvenscheibe, die durch ihre Formgebung einander zugeordnete, einer Drehpositionserkennung dienende
induktive Sender/Empfängerköpfe ganz oder teilweise abschirmt oder freigibt. Schließlich sind zur Vermeidung von auf einen Axialversatz des Rotors zurückgehende Fehlereinflüsse beidseitig des Rotors
Flachspulen aufeinanderfolgend und einander überlappend in Radform angeordnet.

Fig.1

## Tachogenerator für elektrische Maschinen

Stand der Technik

Die Erfindung betrifft einen Tachogenerator nach dem Oberbegriff des Anspruchs 1. Die Bestimmung der Drehzahl von Rotationsmaschinen beliebiger Art, insbesondere von elektrischen Maschinen, gegebenenfalls in Verbindung mit einer gleichzeitigen Bestimmung der Winkelposition des Drehteils, ist bei einer Vielzahl von Anwendungsbereichen und Maschinen erforderlich, beispielsweise um bestimmte Drehantriebe in ihrer Drehzahl zu steuern, oder um aus der jeweiligen Drehzahl Informationen zu gewinnen, die, etwa als Istwerte, Regelungs-und Steuerungszwecken dienen können.

Bei bestimmten Arten von elektrischen Antrieben, die im Prinzip Synchronmaschinen sind und ihrer Funktion nach als eine Art bürstenlose Gleichstrommotoren bezeichnet werden können, ist ergänzend zur Gewinnung eines Drehzahl-Istsignals auch die mindestens relative Angabe der jeweiligen Rotorposition von Bedeutung, damit aus der Stellung des Rotors bestimmt werden kann, welche Spulen zur Erzeugung entsprechender Magnetfelder für den Betrieb eines solchen Elektromotors angeschaltet werden müssen.

Allgemein sind Tachogeneratoren je nach den an sie gestellten Genauigkeitsansprüchen in vielfältiger Form bekannt, beispielsweise als Inkrementalgeber, unter Verwendung von Hall-Generatoren, unter Einsatz von optoelektrischen Mitteln u.dgl. Üblicherweise und meistens auch notwendigerweise sind solchen Tachogeneratoren eine Vielzahl weiterer, verarbeitender Schaltungsteile zugeordnet, etwa um die gewonnenen Signale zu linearisieren, zu verstärken oder in sonstiger Form für eine weitere Verarbeitung, beispielsweise Drehzahlregelung, aufzubereiten. Dies ist notwendig, weil der gewonnene Nutzpegel meistens nur gering ist und auf die ergänzenden elektronischen Hilfsmittel nicht verzichtet werden kann.

Der Erfindung liegt daher die Aufgabe zugrunde, einen beliebigen Drehantrieben zuzuordnenden Tachogenerator, vorzugsweise in Ausgestaltung mit Mittel zur Rotorpositionserkennung der antreibenden Maschine zu schaffen, der einfach aufgebaut ist und sofort ein einwandfrei linearisiertes und daher hochgenaues Ausgangssignal mit großem Nutzpegel liefert.

In einem anderen Zusammenhang ist es bei einem Induktor für rotierende elektrische Maschinen (AT-PS 219 701) bekannt, ein stationäres Magnetsystem und einen Drehenergie liefernden Rotor in axialer Schichtung aufzubauen, wobei auf dem Rotor flache Wicklungen und lamellenförmige Leiter angeordnet sind. Durch die axiale Schichtung ergibt sich zwischen dem Rotor und den Statorteilen ein ebener Luftspalt. Der Statorteil umfaßt eine Vielzahl von Permanentmagneten, denen jeweils über ein gemeinsames Joch verbunden ein magnetischer Hilfskreis parallelgeschaltet ist, der eine elektrische Erregerwicklung aufweist. In spezieller Weise tragen daher die parallelen Hilfskreise zur Erzeugung des Induktorflusses der Maschine dann bei, wenn die Erregerwicklung angesteuert ist, während bei Unterbrechung der Erregerwicklung ein magnetischer Kurzschluß für den jeweiligen Permanentmagneten des Statorteils gebildet ist. Beziehungen zu vorliegender Erfindung bestehen nicht.

Vorteile der Erfindung

Der erfindungsgemäße Tachogenerator löst die genannte Aufgabe mit den kennzeichnenden Merkmalen des Hauptanspruchs und hat den Vorteil, daß praktisch allein aufgrund der geometrischen Strukturen in der Anordnung der zum Rotor gehörenden bzw. diesen bildenden Magnete und der Spulen ein mit besonderer Genauigkeit arbeitender kollektorloser Gleichstrom-Tachogenerator gebildet ist, dessen hoher Ausgangsnutzpegel von Welligkeit, Unsymmetrien, Stör-und Streueinflüssen frei und bis in den Prozentbereich linearisiert ist.

Der Erfindung gelingt es so, durch die spezielle Mechanik, die auch die besondere Formgebung der verwendeten Spulen umfaßt, in Abstimmung zu den Verläufen der Magnetisierungslinien des Rotors Ausgangssignale erzeugt werden, die ohne die Notwendigkeit einer umfangreichen elektronischen Aufbereitung und Korrektur weiterverarbeitet, üblicherweise Regelzwecken zugeführt werden können.

Der Hauptgrund liegt darin, daß die von den einzelnen Spulen abgegebenen EMK eine geradlinig verlaufende Dach form aufweisen, deren jeweiliger Pegel unmittelbar ein Maß für die Maschinendrehzahl ist. Der Dachformverlauf ist einwandfrei linear, geradlinig und frei von Welligkeiten und sonstigen Unsymmetrien und Störeinflüssen, wobei lediglich noch, wie gegebenenfalls bei Tachogeneratoren üblich, aus den jeweiligen, von den Spulen gelieferten Spannungen lediglich Ausschnitte, etwa durch elektronische Schwellwertbindung und Selektion, ausgewählt und weiterverarbeitet werden. Bei der Erfindung handelt es sich hierbei um Bereichsausschnitte der ohnehin linear und geradlinig verlaufenden Dachformen, so daß lediglich noch zu bestimmen ist, zu welchem Zeitpunkt im grundsätzlich eine Wechselschwingung darstellenden Ausgangssignal der einzelnen Spule die Dachform jeweils anzuschneiden ist.

Dies erfolgt mit Vorteil durch Auswertung von Positionserkennungssignalen, die in einer Ausgestaltung vorliegender Erfindung auf induktivem Wege dadurch gewonnen werden, daß der Rotor gleichzeitig eine Kurvenscheibe lagert, die einen von gesonderten Sendeköpfen herrührenden Magnetfluß gegenüber entsprechend positionierten Empfängerköpfen nicht, teilweise oder vollständig, je nach Rotorposition, abdeckt. Auf diese Weise läßt sich durch Auswerten und Vergleich der von den Empfängerköpfen gelieferten, durch die Rotordrehung und die Wirkung der Kurvenscheibe nunmehr modulierten Ausgangssignalen die jeweilige Rotorposition der antreibenden elektrischen Maschine bestimmen, mindestens bei bestimmten Relativpositionen, bei denen vorgegebene Spulen, die sich je nach Polzeit der Maschine über den Umfang wiederholen, anzusteuern sind. Diese Positionserkennung ist natürlich auch für den Bereich des Tachogenerators gültig, so daß man unter Auswertung der Positionssignale auch die Auswahl und das Ausschneiden der Dachformbereiche der elektrischen EMKSignale der Spulen durchführen kann.

Durch die in den Unteransprüchen aufgeführten Maßnahmen sind vorteilhafte Weiterbildungen und Verbesserungen des im Hauptanspruch angegebenen Tachogenerators möglich. Besonders vorteilhaft ist, daß der Aufbau des Tachogenerators vollkommen eisenlos ist, also ohne das Vorhandensein irgendwelcher Jochstrukturen gearbeitet wird; für die von dem in Form eines speziellen Permanentmagneten ausgebildeten Rotors ausgehenden Magnetisierungslinien ist daher kein Eisenrückschluß vorgesehen, so daß sonst auf Hystereseeffekte zurückzuführende Verzerrungen, Unsymmetrien u.dgl. entfallen.

Die einzelnen Spulen arbeiten nach Art eines Mehrphasensystems, vorzugsweise eines Drehstromsystems und bilden daher drei jeweils um 120° versetzte Ausgangsspannungen, vorzugsweise mit sich mindestens teilweise überlappenden Dachformen, so daß durch die erwähnte Ausschnittsbildung eine kontinuierlich verlaufende Gleichspannung als Ausgangssignal des Tachogenerators gewonnen werden kann.

Ein weiterer Vorteil vorliegender Erfindung besteht darin, daß durch die Anordnung von zwei stationären Spulenträgerscheiben mit entsprechend ausgebildeten und positionierten Spulen ein Differenzialgebersystem geschaffen werden kann, wobei mit Bezug auf die antreibende Welle bzw. den Rotor des Tachogenerators eine der Spulenträgerscheiben mit ihren Spulen axial auf der einen und die andere in der axialen Schichtung auf der anderen Seite des Rotor/Permanentmagneten angeordnet werden. Eine solche Differenzialgeberanordnung fängt axiale Verschiebungen des Rotors auf, die sonst in einer Änderung des Meßergebnisses resultieren würden; denn durch eine entsprechende Verschaltung der Spulen auf jeder Seite des Magnetrotors wird eine solche Axialverschiebung, die beispielsweise auf eine Längung der antreibenden Welle der mit einem solchen Tachogenerator ausgestatteten elektrischen Maschine zurückgeführt werden kann, aufgefangen. Ferner sorgt die Differentialanordnung dafür, daß möglicherweise auf die Drehrichtung zurückzuführende Unsymmetrien in den Ausgangsspannungen der Spulen verschwinden, da man die Spulen auf beiden Seiten des Magnetrotors mit ihren Spulenanfängen bzw. Spulenenden so schalten kann, daß sich Drehrichtungseinflüsse herausheben.

Eine besonders vorteilhafte Ausgestaltung vorliegender Erfindung besteht schließlich noch darin, daß die einzelnen, sich in einer Kreisform überlappenden Spulen in ihrer Grundform trapezförmig sind, wobei die beiden schrägen Seitenlinien dieser Trapezform bei der Gesamtheit der auf der Spulenträgerscheibe angeordneten Spulen die Speichen eines Rades bilden, während die längere Seite des Trapezes ein besonders geeignetes Korrekturmittel bildet, mit welchem die von jeder einzelnen Spule und schließlich von der Spulengesamtheit abgegebene Meßspannung in ihrer Form beeinflußt werden kann, und zwar speziell im schon erwähnten Dachformverlauf. Dadurch, daß man diese, sich eigentlich in Richtung oder in Gegenrichtung zu den sich bewegenden Magnetlinien verlaufenden Trapezgrundlinien-Spulenstege mit in den aktiven Magnetbereich mindestens teilweise hineinbringt und in spezieller Weise auch formt - wodurch auch in diesen Grundlinien-Spulenstegen, die in dem fertigen Aufbau aufeinanderfolgend die äußere Radperipherie bilden, zur Korrektur ausgewertete Spannungsteile induziert werden, gelingt es insgesamt, die von jeder Spule abgegebene Spannung in ihrer Kurvenform so zu beeinflussen, daß sich die angestrebten Dachformverläufe ergeben.

Zeichnung

Ausführungsbeispiele der Erfindung sind in der Zeichnung dargestellt und werden in der nachfolgenden Beschreibung näher erläutert. Es zeigen:

Fig. 1 ein erstes Ausführungsbeispiel eines erfindungsgemäßen Tachogenerators in einer Seitenansicht und

Fig. 2 die mindestens einmal verwendete Spulenträgerscheibe mit der Anordnung der Spulen und der Positionssensorköpfe in Draufsicht;

Fig. 2a die Spulenschichtung mit gegenseitiger Überdeckung im Umfangsbereich des "Spulenrades" im Ausschnitt;

Fig. 3 in Form eines Diagramms eine mögliche Ausführungsform des Verlaufs der von den Spulen abgegebenen Phasenspannungen über der Zeit;

Fig. 4 eine Draufsicht auf den an seinem Umfang zusätzlich eine Kurvenscheibe zur Positionserkennung tragenden, aus magnetischem Material bestehenden Rotor, aus welcher auch, in Verbindung mit der Darstellung der Fig. 1 die einzelnen Pole in ihrer Anordnung und Zuordnung erkennbar sind und

Fig. 5a und 5b
in Form von Diagrammen den Verlauf der induktiven Senderköpfe für die Positionserkennung zugeführten Speisespannung (Fig. 5a) und den von separaten induktiven Empfängerköpfen durch den Einfluß der magnetischen Kurvenscheibe modulierten Verlauf des empfangenen Signals.

Beschreibung der Ausführungsbeispiele

Der Grundgedanke vorliegender Erfindung besteht darin, ähnlich wie die Speichen eines Rades in der Form trapezförmig ausgebildete Flachspulen vorzugsweise überlappend anzuordnen und in axialer Schichtung einen drehangetriebenen Magnetrotor vorzusehen, der daher axial vor den Flachspulen steht und mit seinen hauptsächlich ebenfalls in axialer Richtung austretenden Magnetisierungslinien bei eigenem Antrieb die Spulenwicklungen - schneidet, und zwar zunächst primär die Wicklungen, die, zu Stegen zusammengefaßt, in der radförmigen Spulengesamtanordnung die Speichen des Rades bilden. Dieser Aufbau geschieht unter Verzicht auf jegliche Führung der Magnetisierungslinien durch Joche, Eisenteile o.dgl.

Eine Ausgestaltung umfaßt dann die wichtige Korrekturmöglichkeit der von den trapezförmigen Spulen abgegebenen EMK durch die jeweiligen Trapezgrundlinien-Spulenstege, die ebenfalls in dem magnetischen aktiven Bereich angeordnet sind, also in dem Bereich, in welchem ebenfalls noch von dem sich drehenden Rotor ausgehende Magnetlinien anzutreffen sind. Diese Dachformoder Grundlinien-Spulenstege werden nach dem Wickeln der dann schon die grundsätzliche Trapezform aufweisenden Spulen noch speziellen Formwirkungen unterworfen, um so optimale Korrekturergebnisse bezüglich der Dachform-Kurvenverläufe der abgegebenen Spannungen zu erzielen.

Eine weitere Ausgestaltung vorliegender Erfindung ist dann noch auf die Möglichkeit gerichtet, unter Einbeziehung von induktiven Sender-und Empfängerspulen, die ebenfalls auf den Spulenträgerscheiben angeordnet sind und die dem Einfluß einer magnetisch wirksamen, am Rotor befestigten Kurvenscheibe unterworfen sind, gleichzeitig eine, soweit gewünscht, auch sehr genaue Drehwinkelpositionserkennung durchzuführen.

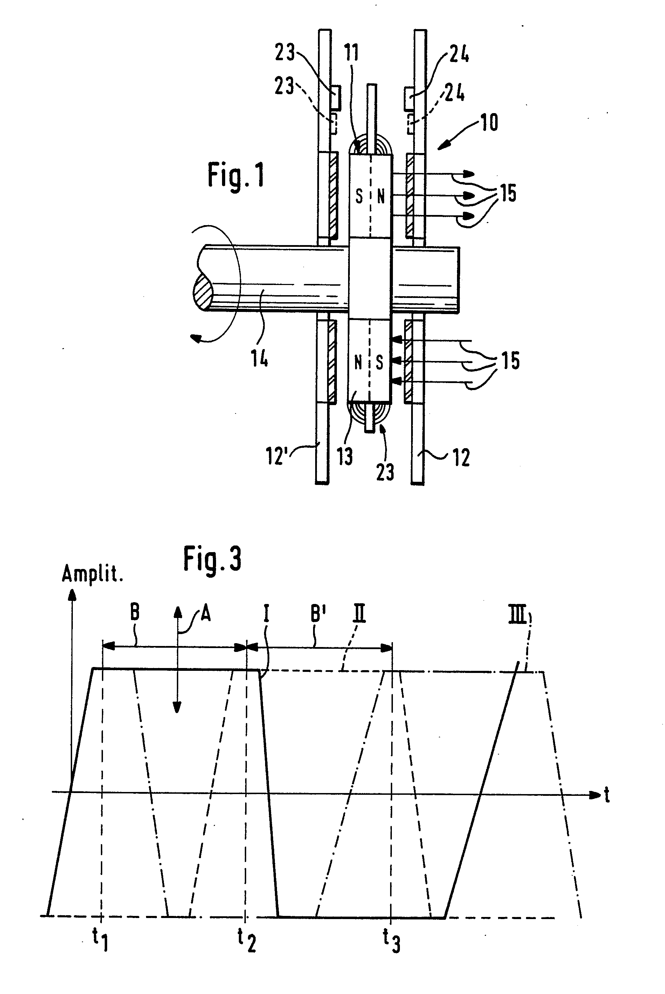

Bei dem Ausführungsbeispiel der Fig. 1 ist der drehangetriebene magnetische Rotor des Tachogenerators 10 mit 11 bezeichnet und in axialer Schichtung mindestens einer stationär gelagerten Spulenträgerscheibe 12 zugeordnet.

Der Rotor 11 umfaßt eine aus magnetischem Material bestehende Scheibe 13 mit einer zentralen Bohrung zur Aufnahme der den Rotor lagernden und antreibenden Welle 14, die auch ein Ausgangswellenstutzen einer zugeordneten elektrischen Maschine oder eines sonstigen Drehantriebs sein kann, dessen Drehzahl und gegebenenfalls Drehwinkelposition zu bestimmen ist.

Die Lagerung der Welle 14, die den Magnetrotor 11 trägt, braucht nicht genauer erläutert zu werden, da sie nicht Teil der Erfindung ist; desgleichen ist es nicht erforderlich, aufzuzeigen, wie die mindestens eine, bei einem bevorzugten Ausführungsbeispiel die zwei Spulenträgerscheiben 12, 12' gelagert sind. Bevorzugt befinden sie sich innerhalb eines geeigneten (nicht dargestellten) Gehäuses.

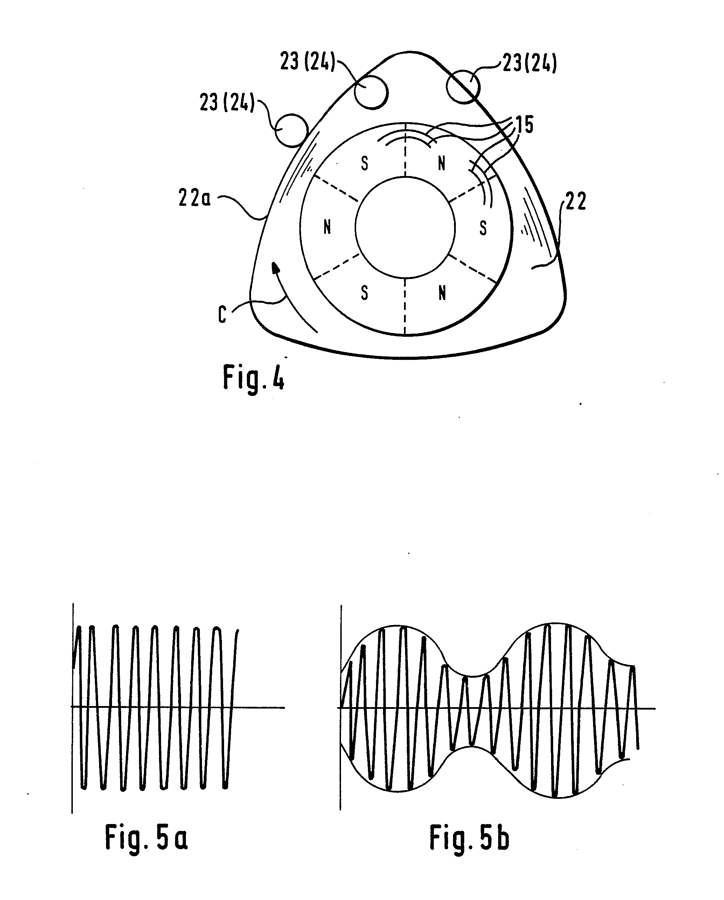

Das Material des Magnetrotors 11 kann ein geeignetes magnetisches Sintermaterial sein; die Magnetisierung des Magnetrotors 11 ist so getroffen, daß, wie am besten in Verbindung mit der Darstellung der Fig. 4 verstanden wird, über den Umfang der Ringscheibe 13 jeweils einander abwechselnd Nord-und Südpole auf jeder Scheibenfläche vorhanden sind, so daß sich eine sternförmige Magnetisierung ergibt und jeweils bestimmte Scheibensegmente abwechselnd Nord-und Südpole bilder, während auf der anderen Seite der Ringscheibe 13 in der gleichen Weise über den Umfang Scheibensegmente jeweils abwechselnd Nord-und Südpole bilden, jedoch so, daß jeweils einem in einem vorgegebenen Winkel stehenden Pol auf der anderen Außenfläche (notwendigerweise) der entsprechende Gegenpol zugeordnet ist, wie dies am besten der Darstellung der Fig. 1 entnommen werden kann. Solche speziellen Magnetisierungsformen können durch geeignete Eisenjochformen erzeugt werden, worauf hier aber nicht eingegangen zu werden braucht, da Art, Aufbau und Verteilung der Pole in der den Magnetrotor 11 bildenden Loch-oder Ringscheibe 13 aus der Darstellung der Zeichnung der Fig. 1 und 4 klar erkennbar ist.

Für den Meßvorgang des erfindungsgemäßen Tachogenerators sind die Magnetlinien von Bedeutung, die axial (und wenn zu beiden Seiten des Magnetrotors 11 Spulenträgerscheiben 12, 12' angeordnet sind) auf beiden Seiten des Magnetrotors austreten und in die angrenzenden Polsegmente wieder eintreten. Entsprechende Magnetlinienverläufe sind versucht worden in der Flächendarstellung der Fig. 4 bei 15 zu zeigen; die Erfindung benutzt also zur Induzierung der gewünschten Spannungen in den Spulen (hierauf wird weiter unten noch eingegangen) lediglich die axial aus den Ringflächen des Magnetrotors 11 austretenden Magnetlinien, nicht die Magnetlinien, die sich gegebenenfalls von beiden Seiten über die äußere oder innere Randkante schließen. Auch dort ergibt sich (notwendigerweise) ein Magnetlinienverlauf, da sich jeweils entgegengesetzte Pole auf dem gleichen Winkelsegment der Ringscheibe 13 gegenüberliegen (müssen), - ein Pol allein kann ja nicht existieren.

Es versteht sich, daß der spezielle Magnetisierungsverlauf, also beispielsweise die Stärke des Magnetisierungsfeldes in den einzelnen Polen des Magnetrotors abgestimmt ist auf die gewünschte Ausgangsspannungs-Kurvenform, so daß sich ein verkoppelter Gesamteffekt in Verbindung mit der speziellen Spulenform ergibt, der dann schließlich zu den in Fig. 3 gezeigten Ausgangs-Kurvenspannungsverläufen (in den Spulen induzierte EMK) führt.

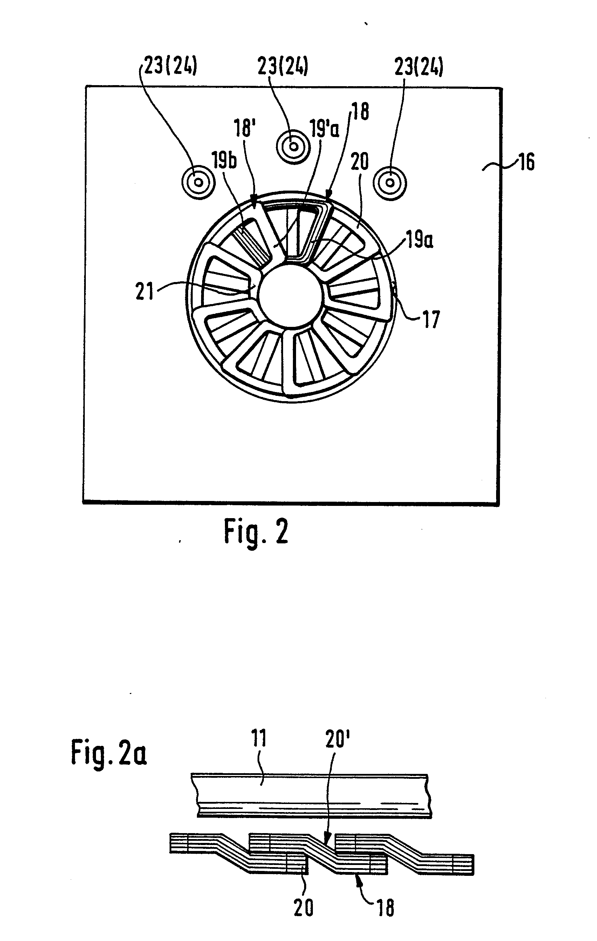

Da die einander gegenüberliegenden und durch den Magnetrotor 11 getrennten Spulenträgerscheiben 12, 12' insoweit symmetrisch und gleichartig aufgebaut sind, braucht auf den Aufbau einer Spulenträgerscheibe mit den zugeordneten Spulen nur einmal anhand der Darstellung der Fig. 2 eingegangen werden. Eine Trägerform, die beispielsweise eine, wie in der Zeichnung der Fig. 2 dargestellte, rechteckförmige oder auch runde Scheibe aus einem geeigneten, magnetisch und elektrisch möglichst inerten (Kunststoff)-Material besteht, ist mit 16 bezeichnet und trägt, ausgerichtet auf die Ringform des Magnetrotors 11 Flachspulen, die aber vorzugsweise innerhalb eines mittleren Kreisausschnitts 17, etwa wie ein Speichenrad in eine umgebende Laufflächenform, eingesetzt sind.

Dabei hat sich herausgestellt, daß zur Erzielung bester Ergebnisse jede Einzelspule eine im wesentlichen trapezförmige Form aufweisen sollte, also, wie anhand der Spule 18 in Fig. 2 erläutert, zwei schräge Seitenteile 19a, 19b aufweist, die im folgenden als Speichenstege bezeichnet werden, und über einen längeren Basissteg 20 und einen kürzeren Verbindungssteg 21 verfügt.

Damit sich aus einer solchen Spulenform die Radform bilden läßt, sind die längeren Basisstege 20, die weiter vorn zum Teil auch als Dachformstege bezeichnet sind, in der Kreisform außenliegend angeordnet, da sich an dieser Stelle natürlich auch der größere Umfang befindet.

Die Spulen überlappen einander und sind in dieser gefächerten, einem Kreis folgenden Ringform zur Bildung eines vollständigen Rades aneinandergelegt und miteinander verbunden, vorzugsweise durch Klebung, so daß dann die zum Teil übereinanderliegenden inneren Verbindungsstege 21 die Radnabe, die schrägen Seitenstege oder Speichenstege 19a, 19b, die Speichen des Rades und die aneinandergelegten, sich teilweise überlappenden längeren Basisstege 21 die Reifenperipherie bilden. Die ganze Reifen-Ringform der Flachspulen ist dann in der Kreisausnehmung 17 der Spulenträgerscheibe 16 befestigt. Dabei weist die Gesamtanordnung der Spulen in Radform noch folgende Besonderheiten auf. Wegen der Überlappung liegt etwa auf dem hinteren Drittel jeder bzw. in der Darstellung der Fig. 2 der vorhergehenden Spule 18 die nachfolgende Spule 18' mit ihrem insofern dann vorderen Speichensteg 19a' auf, so daß der hintere Speichensteg 19b jeder bzw. der vorhergehenden Spule 18 nur durch die innere, ebenfalls trapezförmige Spulenöffnung sichtbar ist, während der kürzere Verbindungssteg (zur Nabe hin) und der obere längere Basissteg (der Radperipherie) dann jeweils völlig auf den entsprechenden Verbindungs-und Basisstegen der vorhergehenden Spule aufliegt.

Damit sich dies nicht treppenartig fortsetzt, sondern die Radform der Spulengesamtanordnung in einer Ebene verbleibt, liegt jede Spule, was ohne weiteres zu verstehen ist, etwas schräg in dem Kreisausschnitt 17, denn auch das jeweils vordere Teil der Spule liegt ja auf dem hinteren Teil der vorhergehenden Spule auf. Der hintere Teil wird also durch die nachfolgende Spule etwas heruntergedrückt (wenn man von der Draufsicht der Fig. 2 ausgeht), während der vordere Teil durch das Aufliegen auf dem hinteren Teil der vorhergehenden Spule etwas nach oben angehoben erscheint. Man kann die ganze Anordnung aber auch so sehen, daß jede Spule im Übergang von ihrem vorderen zum hinteren Teil im mittleren Bereich des Verbindungs-bzw. Basissteges abgebogen erscheint; dieser mittlere Teil stellt also die Verbindung zwischen einem höherliegenden Spulenteil und einem tieferliegenden Spulenteil dar, so daß jede Spule Anteile in zwei natürlich eng benachbarten Ebenen aufweist. Auch diese Spulenkonfiguration kann ausgenutzt werden, um durch empirische Versuche die Endform der Meßausgangsspannung zu optimieren und letzten Korrektureinflüssen zu ununterwerfen. Gezeigt ist diese Spulenschichtung mit dem mittleren, abgebogenen Teilbereich 20' im Umfangsbereich, also bei den Basisstegen 20 in Fig. 2a.

Der Aufbau jeder einzelnen Spule kann in üblicher Weise durch Wickeln auf einem entsprechend trapezförmig/eckigen Dorn hergestellt werden, allerdings mit einem nachfolgenden Formpressen, um insbesondere den Basissteg 20, der erhebliche Bedeutung für den geradlinigen, linearisierten Dachformverlauf der Spannungsverläufe der Fig. 3 hat, in eine solche Form zu bringen, daß die gewünschten Ausgangsspannungsverläufe auch resultieren. Tatsächlich liegt hier eine Besonderheit auch darin, daß der Basissteg 20 nicht der Kreisringform eines Rades bzw. des Ausschnittes 17 in der Trägerscheibe 16 folgt, sondern deutlich geradlinig, also insofern nach innen eingedrückt, verläuft, so daß durch die Art der von dem Magnetrotor 11 bei dessen Drehbewegung ausgehenden Felder und dem Umstand, daß sich die Basisstege 20 jeder Spule (noch) im magnetisch aktiven Bereich befinden, der von den Magnetrotor-Feldlinien geschnitten wird, in Kombination der entsprechend Fig. 3 angestrebte Ausgangs-Meßspannungsverlauf, hauptsächlich der Dachform, erzielt werden kann.

In der Darstellung der Fig. 3 sind die Verläufe von drei jeweils um 120° versetzten Phasenspannungen dargestellt; die Basisstege 20 jeder Spule erbringen merkliche Anteile an der von jeder Spule erzeugten EMK - Korrekturanteile im wesentlichen für den Dachformverlauf der verketteten Ausgangsspannungen, die in Fig. 3 dreiphasig dargestellt sind.

Es wird ausdrücklich darauf aufmerksam gemacht, daß der flache, lineare und, wie wiederholt erläutert und angestrebt, geradlinige Dachformverlauf der Ausgangsspannungen entsprechend dem Diagramm der Fig. 3 nicht durch Begrenzerwirkung oder durch ein Abschneiden über Dioden (Clippen) o.dgl. erzielt ist, sondern unmittelbar aus den geometrisch-strukturellen Gegebenheiten der Flachspulenanordnung, der Form der Spulen und der Form der axialen Magnetfeldlinien des Rotors 11 resultiert. Das bedeutet auch, daß bei Drehzahländerungen der Dachform-Spannungslevel, also die durch die Dachform gegebene Spannungshöhe der bei dem dargestellten Ausführungsbeispiel ein Drehstromsystem bildenden Flachspulen der Drehzahl proportional folgt, sich also entsprechend dem Pfeil A erhöht oder erniedrigt. Unter Vermeidung jedes Hystereseeffekts oder sonstiger, hieraus resultierender Störeinflüsse aufgrund des eisenlosen Aufbaus (Abfrage der vom Magnetrotor 11 herrührenden Magnetfelder durch Art, Form, Aufbau und Anzahl der Spulen direkt ohne Eisen) ergibt sich in den gerade verlaufenden Speichenstegen 19a, 19b die Haupt-EMK, während in den Dachschrägen der Flachspulen, also in den Basisstegen 20 und gegebenenfalls bzw. auf Wunsch auch in den Verbindungs-oder auch Nabenstegen 21 Gegenspannungen induziert werden (können), die zu der gewünschten Impulsformung beitragen, also elektrische Ausgangsimulsformung durch Spulenformung.

Die Versetzung der Spulen zueinander sowie deren Anzahl ergibt sich aus der Anzahl der Pole des Magneten, die grundsätzlich frei wählbar ist; hat man einen, wie bei dem dargestellten Ausführungsbeispiel sechspoligen Erregermagneten als Magnetrotor, dann kann man die vorhandenen Spulen nach Art eines Drehstromsystems zu drei Strängen verschalten, so daß, wieder anhand des dargestellten Ausführungsbeispiels, welches ausdrücklich als nicht einschränkend zu verstehen ist, bei neun vorhandenen Flachspulen miteinander verbunden sind die erste, vierte und siebente zur Bildung der ersten Phasenspannung, die in dem Diagramm der Fig. 1 mit I bezeichnet und durch die dick durchgezogenen Linien dargestellt ist, während die zweite Phasenspannung des Drehstromsystems gebildet ist von der zweiten, der fünften und der achten Spule (Spannungsverlauf bei II in Fig. 3 dargestellt in gestrichelter Linienführung) und die letzte Phasenspannung (in dem Diagramm der Fig. 3 dargestellt bei III mit strichpunktierter Linienführung) gebildet ist aus den miteinander verketteten Spannungen der dritten, sechsten und neunten Spule.

Ein weiterer Beitrag zur Ausgangsspannungsformung ergibt sich aus der speziellen Art der Magnetisierung der einzelnen Pole des Magnetrotors 11, beispielsweise dahin gehend, daß etwa in Segmentmitte eine starke Magnetisierung angestrebt wird, während in den Randbereichen bewußt schwächer magnetisiert wird. Solche unterschiedlichen Magnetisierungen können, was in den Zeichnungen nicht dargestellt ist, erzielt werden durch spezielle Ausbildung der Magnetisierungseinrichtung für den Magnetrotor 11, indem man nämlich die in diesem Fall verwendete Jochform für den Magnetisierungsvorgang entsprechend ausbildet und beispielsweise die Sättigungsbereiche im Magnetisierungsjoch so bestimmt, daß sich der gewünschte axiale Magnetlinienverlauf im Magnetrotor ergibt. Auf diese Umstände wird deshalb so ausführlich eingegangen, weil im Endeffekt empirische Schritte in Verbindung mit der jeweiligen Bestimmung der Ausgangskurvenform entsprechend Fig. 3 erforderlich sind, um zu den optimalen Ergebnissen zu gelangen, wobei sich in der Summe der hier maßgebende Dachformverlauf durch die beiden Parameter optimieren läßt, nämlich:

1. Geometrie der Flachspulen und

2. Verlauf der Magnetisierungslinien im Magnetrotor.

Die Erfindung verwendet dann lediglich noch elektronische Mittel, um aus den von den Spulen gelieferten Trapezspannungen Dachformverläufe elektronisch auszuschneiden, wobei ein jeweiliger Dachformausschnitt beispielsweise so gelegt werden kann, wie der Abstandspfeil B in Fig. 3 zeigt. Die Dachformen können daher praktisch lückenlos ausgeschnitten werden, bei praktisch perfekt gerader Verlaufsform. Um die Örter, genauer gesagt die Zeitpunkte $t_1$ und $t_2$ bzw. $t_2$ und $t_3$ usw. für das Ausschneiden der Dachformen zu gewinnen, benötigt man eine Positionserkennung, auf die weiter unten noch eingegangen wird.

Eine weitere vorteilhafte Ausgestaltung vorliegender Erfindung besteht darin, daß diese auch in der Lage ist, auf möglicherweise auftretende Lagerabstandsänderungen, also auf eine axiale Verschiebung des Magnetrotors 11 mit Bezug auf die stationären Spulenträgerplatten 12, 12' in vollständig korrigierender Weise zu reagieren, obwohl gerade diese Abstandsänderung bei der hier vorkommenden, ausschließlichen Auswertung der axial austretenden Magnetlinienverläufe für Form und Ausmaß der Ausgangsspannungen von erheblichem Einfluß ist.

Gelöst wird dieses Teilproblem durch die Anordnung von zwei, Spulen in der beschriebenen Art und Weise tragenden Spulenträgerplatten 12, 12' zu beiden Seiten des Magnetrotors 11, so daß eine Differentialanordnung entsteht mit der allgemeinen Maßgabe, daß jetzt das, was die eine Spulenanordnung durch eine axiale Abstandsänderung an Magnetlinien zu wenig bekommt, der anderen Spulenanordnung verstärkt zugeführt wird, so daß sich bei einer entsprechenden Verschaltung der Spulen auf beiden Spulenträgerplatten 12 und 12' Abstandsänderungen, also ein Axialversatz des Magnetrotors 11 heraushebt. Hierdurch vereinfacht sich auch die (anfängliche) Justierung des Systems erheblich. Ein weiterer Vorteil einer solchen Differentialanordnung, der sich aus den Induktionsgesetzen ergibt, liegt darin, daß Verzerrungen, die sich an den Spulenausgangsspannungen aufgrund der Drehrichtung ergeben, ausgeglichen werden, da man, wie es sich versteht, die eine Spulenanordnung, vereinfacht ausgedrückt, so schalten kann, daß diese die Induktionswirkung des Magnetrotors 11 in der einen Richtung empfindet, was die andere als Gegenrichtung empfindet und umgekehrt. Beispielsweise indem man die Überlappungen der Spulen links-oder rechts laufend auslegt. Kehrt der Rotor dann seine Drehrichtung um, ergeben sich lediglich die umgekehrten Verhältnisse und Korrektureinflüsse an den Spulen.

Eine weitere Ausgestaltung vorliegender Erfindung besteht darin, daß die weiter vorn schon erwähnte Rotorpositionserkennung sich nicht nur lediglich auf die Position des Magnetrotors 11 zum Anschneiden der Ausgangsdachformspannungen bezieht, sondern auch bezüglich des Rotors der den Tachogenerator antreibenden elektrischen Maschine, die beispielsweise im Prinzip als Synchronmaschine und in ihrer Funktion als bürstenloser Gleichstrommotor ausgelegt sein kann und bei der es daher wichtig ist, daß man bestimmte Spulen zu bestimmten Momenten durch elektrische Schaltungen ansteuert, nicht, wie sonst üblich, mittels eines mechanischen Kommutators.

Zur Positionserkennung im Zusammenhang einer kombinierten Lösung mit dem Tachogenerator wird so vorgegangen, daß auf dem Rotor, vorzugsweise mittig, eine aus einem magnetisch permeablen Material bestehende Kurvenscheibe 22 (Eisenscheibe) befestigt wird, während zweckmäßigerweise gleich auf den Spulenträgerplatten 12, 12' aufeinander ausgerichtet und axial gegenüberliegend induktive Senderköpfe 23 und induktive Empfängerköpfe 24 so angeordnet werden, daß sie bei Drehung der Kurvenscheibe 22 je nach deren Form und Drehposition ganz oder teilweise abgedeckt oder freiliegend sind. Gemeint ist hiermit, daß die die Kurvenscheibe 22 bildende Eisenscheibe nach Art einer Lochblende die freie Wegstrecke zwischen den Sender-und Empfängerköpfen 23, 24 unterbricht oder offen läßt, wobei Sender-und Empfängerköpfe als Ferritköpfe ausgebildet sind und auf induktiver Basis arbeiten ähnlich den bekannten Näherungsschaltern. In jedem der Senderköpfe wird daher ein magnetisches Wechselfeld erzeugt, welches bei Drehung der Kurvenscheibe 22 mehr oder weniger abgedeckt und für den Empfängerkopf dann nicht oder nur noch schwach empfangbar ist.

Das bedeutet mit anderen Worten, daß der oder die Empfängerköpfe das Abbild der Magnetrotorbewegung sehen, wobei das magnetisch permeable Material (Eisen) der Kurvenscheibe 22 mehr oder weniger abschirmt.

Art, Anzahl, Aufbau und die Verteilung der Sender-und Empfängerköpfe sowie die Form der Kurvenscheibe 22 können grundsätzlich den Erfordernissen entsprechend angeordnet werden, bei dem dargestellten Ausführungsbeispiel sind drei Senderköpfe und entsprechend drei Empfängerköpfe 23, 24 vorgesehen, die, wie die Darstellung der Fig. 2 bzw. die der Fig. 4 in Verbindung mit der Kurvenscheibe 22 zeigt, so über den Umfang des Magnetrotors verteilt angeordnet sind, daß, abgestimmt auf die Form der Kurvenscheibe 22 im Ruhezustand beispielsweise ein Sender-Empfängerkopfpaar nicht abgedeckt, ein anderes, beispielsweise in Drehrichtung folgendes, voll abgedeckt und ein drittes, wieder in der Drehrichtung gesehen, teilweise abgedeckt ist. Dies wiederholt sich zyklisch dann, wenn die Form der Kurvenscheibe 22 beispielsweise so ausgebildet ist, wie in Fig. 4 gezeigt, d.h. in der grundsätzlichen Form einem gleichschenkligen Dreieck folgt, mit beispielsweise abgerundeten Kanten und etwas ausgebauchten Seitenflächen.

Man erkennt, daß bei der in Fig. 4 gezeigten Verteilung der induktiven Sender-und Empfängerköpfe das in der Drehrichtung entsprechend dem Pfeil C erste Sender/Empfänger kopfpaar von der auflaufenden Kante 22a zunächst teilweise, dann ganz überdeckt wird, während gleichzeitig hiermit das nächstfolgende zunächst teilweise, dann ganz freigegeben und das letzte vollständig überdeckt wird.

Es ergibt sich daher als Ausgangssignal jedes Empfängerkopfes eine entsprechend der Darstellung der Fig. 5b mit einer Hüllenkurve modulierte Ausgangsspannung, wenn der jeweils zugeordnete Senderkopf mit einem Wechselsignal konstanter Amplitude und einer Frequenz von beispielsweise 20 KHz beaufschlagt ist. Die Modulation des empfangenen Signals ist ein Abbild der Drehbewegung, mindestens der relativen Drehbewegung, so daß man weiß, welche Spulen in der antreibenden Hauptmaschine jeweils anzusteuern sind bzw. bei von welchen Spulen gelieferten Ausgangsspannungen entsprechend Fig. 3 die Dachform für das Zusammenstellen einer gemeinsamen, drehzahlproportionalen Gleichspannung angeschnitten werden müssen. Mit relativer Position ist gemeint, daß sich bei bestimmten Maschinen, je nach deren Polzahl die geometrischen Strukturen wiederholen, so daß nicht die absolute Winkelposition über 360° von Bedeutung ist, sondern nur die Relativposition jeweils sich wiederholender, also insofern gleichartiger Pole zu bestimmten Spulen.

Da es sich hierbei üblicherweise um Drehstromsysteme handelt, ergibt sich in entsprechender Abstimmung auch die Dreieckgestaltung der Kurvenscheibe 22 auf dieser Basis; es versteht sich, daß bei anderen Mehrphasensystemen und überhaupt bei anderen antreibenden Systemen, beispielsweise wenn man auch die Absolutposition des Rotors wissen will, andere Verteilungen der induktiven Sender-und Empfängerköpfe möglich sind.

Die modulierten Ausgangsspannungen entsprechend Fig. 5b der Empfängerköpfe 24 können bei der elektronischen Weiterverarbeitung beispielsweise Schwellwertschaltungen zugeführt werden, die bei bestimmten Positionen der Hüllkurvenform ansprechen und entsprechende Umschaltungen, Ansteuerungen u.dgl. veranlassen; es können auch Phasenvergleichsschaltungen vorgesehen sein, die die relative Phasenlage der Hüllkurven zueinander erfassen und auswerten.

Eine bevorzugte weitere Wirkung der Kurvenscheibe 22 besteht darin, daß die von dem Magnetrotor 11 aufgrund seiner eigenen Magnetisierung ausgehenden Streufelder gegebenenfalls die Sender/Empfängerköpfe der Positionserkennung beeinflussen könnten; hier wirkt die Blendenscheibe oder Kurvenscheibe 22 so, wie bei 23 in Fig. 1 gezeigt; die Kurvenscheibe schließt aufgrund ihrer magnetisch permeablen Struktur diese Felder kurz, so daß sich keine Beeinflussung der Positionserkennung und im übrigen auch keine möglichen, unerwünschten Beeinflussungen der Flachspulen des Tachogenerators aus diesen nicht axial verlaufenden Magnetlinien ergeben können.

Auf einen weiteren Gesichtspunkt ist noch einzugehen. Abgesehen davon, daß durch die spezielle Anordnung der induktiven Sender-und Empfängerköpfe auch die Drehrichtung festgestellt werden kann, nämlich durch Erfassen und Vergleich der von den Senderköpfen abgegebenen modulierten Ausgangsspannungen und ihrer relativen Phasenlage zueinander ermöglicht der Verlauf der gewonnenen Hüllkurve auch die Erstellung eines sogenannten Kommutierungs-Hilfssignals für die antreibende elektrische Maschine. Diese Möglichkeit beruht auf dem Umstand, daß die elektrischen Maschinen zur Erzielung eines besten Wirkungsgrades unter Umständen nicht rein sinusförmig kommutiert werden können bzw. sollten, also mit entsprechend sinusförmigen Strömen ange steuert werden, weil die beteiligten Magnete und Felder verzerrt sind. Geht man nämlich von einer entsprechenden geometrischen Verzerrung oder Formänderung der die Modulation der Hüllkurve im Endeffekt bewirkenden, daher insofern geänderten Kurvenscheibe 22 aus, dann kann man durch Verzicht auf die zunächst rein sinusförmige Modulation auch andere Formen erzeugen, die dann ein Abbild der gewünschten oder notwendigen Kommutierungskennlinie für den antreibenden Elektromotor sind. Eine solchermaßen aus einem veränderten Hüllkurvensignal gewonnene Kommutierungs-Hilfslinie kann dann als Regelsignal, also als Führungsgröße für den Stromregler der antreibenden elektrischen Maschine verwendet werden. Der Speisestromregler für den elektrischen antreibenden Motor nutzt dann das in dieser Weise geänderte Hüllkurvensignal mindestens als Korrekturwert für die der Maschine zuzuführenden Ströme aus. Die Erfindung bietet daher durch die Verwendung von induktiven Gebern und Empfängern zur Positionsbestimmung in Verbindung mit einer Kurvenscheibe Möglichkeiten, die über die reine Gewinnung eines Positionssignals hinausgehen.

Es empfiehlt sich, die Polzahl des Tachogenerators auf die Polzahl der zugeordneten elektrischen antreibenden Maschine abzustimmen, also in der Polzahl gleichzumachen. Eine sechspolige antreibende Maschine benötigt daher einen Tachogenerator der dargestellten Art, während bei einer achtpoligen oder zwölfpoligen elektrischen Maschine sinnvollerweise, und zwar schon um die Positionsbestimmung richtig durchführen zu können, dann entsprechend acht-oder zwölfpolige Tachogeneratoren auszubilden sind. Ergibt sich bei der elektrischen antreibenden Maschine ein Dreiphasensystem, dann genügt für die Positionserkennung auch eine Mindestanzahl von drei induktiven Sender/Empfängerköpfen, während bei einer achtpoligen Maschine dann ent sprechend vier Sender/Empfängerköpfe usw. benötigt werden.

Alle in der Beschreibung, den nachfolgenden Ansprüchen und der Zeichnung dargestellten Merkmale können sowohl einzeln als auch in beliebiger Kombination miteinander erfindungswesentlich sein.

## Ansprüche

1. Tachogenerator für Drehantriebe, insbesondere für elektrische Maschinen und insbesondere mit Mitteln zur Positionserkennung, bei dem durch entsprechend dem Drehantrieb veränderlicher magnetischer Durchflutung in Spulen Spannungen (EMK) induziert und ausgewertet werden, dadurch gekennzeichnet, daß in axialer Schichtung aufeinanderfolgend ein permanentmagnetischer, drehantriebener Rotor (Magnetrotor 11) mit axial verlaufender Hauptmagnetisierung und angrenzend zu diesem mindestens eine Flachspulen (18) mit radial verlaufenden Hauptwicklungssträngen (Speichenstege 19a, 19b) tragende stationäre Spulenträgerscheibe (12, 12') angeordnet sind.

2. Tachogenerator nach Anspruch 1, dadurch gekennzeichnet, daß die Speichenstege (19a, 19b) der Flachspulen (18) zur Korrektur (Dachformkorrektur) des Ausgangsspannungsverlaufs über tangential verlaufende, obere und untere Wicklungsstränge (Verbindungs-oder Nabenstege 21; Trapezgrundlinienstege oder Basisstege 20) verbunden sind, bei allgemein trapezförmiger Grundform jeder Flachspule, wobei mindestens die in der gebildeten Radperipherie liegenden Basisstege (20) in magnetisch aktiven Bereichen des Magnetrotors (11) liegen.

3. Tachogenerator nach Anspruch 1 oder 2, dadurch gekennzeichnet, daß der ringförmige Magnetrotor (11) in eine vorgegebene Anzahl von Pole bildenden Segmenten sternförmig unterteilt ist, so daß sich auf jeder axialen Ringfläche jeweils abwechselnd Nord-und Südpole ergeben, denen entsprechend auf der gegenüberliegenden äußeren Ringfläche Süd-und Nordpole gegenüberliegen und daß die trapezförmigen Flachspulen so angeordnet sind, daß sie auf mindestens einer Seite mit ihrer Hauptebene parallel zu der durch die Pole segmentierten Ringoberfläche des Magnetrotors (11) liegen derart, daß in den Speichenstegen (19a, 19b) jeder Flachspule die Haupt-EMK und in den peripher verlaufenden Spulenwicklungsteilen (Basisstegen 20) Korrektur(Gegen)Spannungen induziert sind zur Beeinflussung des Dachformverlaufs der trapezförmigen, zu einem Mehrphasensystem zusammengesetzten Ausgangsspannungen der einzelnen Spulen.

4. Tachogenerator nach einem der Ansprüche 1 bis 3, dadurch gekennzeichnet, daß die trapezförmigen Spulen (18) einander fächerförmig überlappend und einer allgemeinen Kreis-oder Ringform folgend auf der mindestens einen Spulenträgerscheibe (12, 12') angeordnet sind derart, daß sich durch die Abfolge der Spulen eine allgemeine Radform ergibt, in welcher die in der Spulentrapezform schräg verlaufenden Seitenlinien die Speichenstege (19a, 19b), die Basisstege (20) die äußere Radperipherie und die inneren Verbindungsstege (21) die Nabenöffnung des Rades bilden.

5. Tachogenerator nach einem der Ansprüche 1 bis 4, dadurch gekennzeichnet, daß die sich fächerartig überlappenden Flachspulen (18) so angeordnet sind, daß ein vorderer Spulenteil jeweils auf dem Endteil einer folgenden Spule aufliegt und mit seinem eigenen Rückteil unterhalb einer nachfolgenden Spule liegt, während mindestens der Spulenzwischenbereich einen zur Hauptebene des Spulenrades schrägen Verlauf aufweist.

6. Tachogenerator nach einem der Ansprüche 1 bis 5, dadurch gekennzeichnet, daß die Spulen miteinander zur Bildung eines Dreiphasensystems verbunden sind.

7. Tachogenerator nach Anspruch 6, dadurch gekennzeichnet, daß die Anzahl der Magnetpole des Magnetrotors (11) abgestimmt ist auf die Polanzahl der antreibenden elektrischen Maschine und daß die Anzahl der Spulen (18) mindestens der Anzahl der Magnetpole entspricht bzw. ein (gebrochenes) Vielfaches der Magnetpole beträgt und daß die Ausgangsanschlüsse jeweils einer gegebenen Phasenspannung zugeordneten Spulen miteinander verbunden sind.

8. Tachogenerator nach einem der Ansprüche 1 bis 7, dadurch gekennzeichnet, daß bei sechs gleichmäßig über die Ringform des Magnetrotors (11) verteilten Magnetpolen neun einander fächerartig überlappende Flachspulen (18) vorgesehen sind, wobei jeweils die erste, vierte und siebente Flachspule einer ersten Phasenspannung, die zweite, fünfte und achte Flachspule einer zweiten Phasenspannung und die dritte, sechste und neunte Flachspule einer dritten Phasenspannung zur Bildung eines Dreiphasensystems zugeordnet sind.

9. Tachogenerator nach einem der Ansprüche 1 bis 8, dadurch gekennzeichnet, daß die oberen Basisstege (20) jeder Spule (18) entsprechend dem gewünschten Dachformverlauf der jeweiligen Phasenspannung geformt sind.

10. Tachogenerator nach Anspruch 9, dadurch gekennzeichnet, daß die oberen Basisstege (20) zur Bildung einer allgemein im Außenumfang eckigen Radstruktur aus der peripheren Rundung heraus nach innen gedrückt im wesentlichen geradlinig verlaufen.

11. Tachogenerator nach einem der Ansprüche 1 bis 10, dadurch gekennzeichnet, daß die einander überlappenden und miteinander (durch Klebung) verbundenen Flachspulen (18) in eine kreisförmige Ausnehmung (17) der Spulenträgerscheibe (12, 12') eingesetzt (eingeklebt) sind, unter Verzicht auf jegliche Jochstrukturen (eisenfrei).

12. Tachogenerator nach einem der Ansprüche 1 bis 11, dadurch gekennzeichnet, daß neben der speziellen Formung und Ausbildung der der Ausgangsspannungskorrektur in der Dachform dienenden Basisstege (18) der axial aus den Rotorflächen austretende Feldlinienverlauf der einzelnen Pole des Magnetrotors (11) so bestimmt und ausgebildet ist, daß diese einen weiteren Beitrag zur linearisierten geradlinigen Ausgangsdachkurvenform der einzelnen Phasenspannungen bilden.

13. Tachogenerator nach einem der Ansprüche 1 bis 12, dadurch gekennzeichnet, daß zur Vermeidung von Drehrichtungseinflüssen und axialen Abstandsänderungen auf die Ausgangskurvenform beidseitig des Magnetrotors (11) die Flachspulenanordnung tragende Spulenträgerscheiben (12, 12') angeordnet sind, mit einer entsprechenden Verschaltung der jeweils zugeordneten Spulen im Mehrphasensystem zur Bildung einer Fehlereinflüsse ausgleichenden Differentialanordnung.

14. Tachogenerator nach einem oder mehreren der Ansprüche 1 bis 13, dadurch gekennzeichnet, daß aus den Dachformverläufen der einzelnen Phasenspannungen des Mehrphasensystems (Dreiphasensystems) zu vorgegebenen, durch eine Positionserkennung gewonnenen Zeiten ($t_1$, $t_2$, $t_3$, ..) Teilbereiche ausgeschnitten und zu einer der Drehzahl proportionalen Gleichspannung zusammengesetzt werden.

15. Tachogenerator nach Anspruch 14, dadurch gekennzeichnet, daß zur Positionsbestimmung von Magnetrotor (11) und/oder Rotor der antreibenden Maschine (Elektromotor) aus induktiven Sender-und Empfängerköpfen (23, 24) bestehende Positionserkennungsmittel vorgesehen sind, die in ihrer relativen Zuordnung zueinander durch eine sich synchron mit dem Magnetrotor (11) drehende Kurvenscheibe (22) eine Abschirmung oder Freigabe erfahren.

16. Tachogenerator nach Anspruch 15 und einem oder mehreren der vorhergehenden Ansprüche, dadurch gekennzeichnet, daß eine vorgegebene Anzahl von einander zugeordneten induktiven Senderköpfen (23) und Empfängerköpfen (24), axial zueinander ausgerichtet, auf den Spulenträgerscheiben außerhalb des Magnetrotorumfangs, jedoch innerhalb der möglichen Überdeckung einer über ihren Umfang unregelmäßig verlaufenden, am Magnetrotor (11) sitzenden Kurvenscheibe (22) angeordnet sind.

17. Tachogenerator nach Anspruch 16, dadurch gekennzeichnet, daß die Kurvenscheibe (22) aus magnetisch permeablem Material (Eisenscheibe) besteht und ihre Kurvenform so auf die Relativposition der induktiven Sender/Empfängerköpfe (23, 24) abgestimmt ist, daß in jeder Relativposition Sender-und Empfängerköpfe jeweils ganz oder teilweise abgedeckt (abgeschirmt) oder freigegeben sind.

18. Tachogenerator nach Anspruch 16 oder 17, dadurch gekennzeichnet, daß den induktiven Senderköpfen (23 - Ferritköpfe) eine höherfrequente Speisespannung (20 KHz) zugeführt ist, die im von den Empfängerköpfen (24) empfangenen Ausgangssignal nach Form und Drehgeschwindigkeit der Kurvenscheibe (22) hüllkurvenmoduliert ist und daß aus den jeweiligen Hüllkurven der verschiedenen Sender/Empfängerkopfpaarungen und deren relative Phasenlage die Drehpositionserkennung für Magnetrotor (11) und/oder Rotor der antreibenden Maschine ableitbar ist.

19. Tachogenerator nach einem oder mehreren der Ansprüche 1 bis 18, dadurch gekennzeichnet, daß die Anzahl der Pole des Magnetrotors (11), die Anzahl der (beiderseitig) zum Magnetrotor (11) angeordneten Flachspulen (18) und die Anzahl der Sender/Empfängerkopfpaarungen aufeinander und gegebenenfalls auf die Polanzahl der antreibenden elektrischen Maschine abgestimmt ist.

20. Tachogenerator nach Anspruch 19, dadurch gekennzeichnet, daß der Magnetrotor (11) sechs jeweils als Nordpole und Südpole alternierende Pole auf jeder seiner Ringoberflächen aufweist und daß zur Bildung eines Dreiphasensystems mindestens auf einer Seite des Magnetrotors neun Flachspulen (18) einander überlappend angeordnet sind, daß innerhalb eines Winkelsegments einer allgemeinen Kreisform folgend mindestens drei induktive Sender/Empfängerkopfpaarungen angeordnet sind und daß die Kurvenscheibe (22) bei einem allgemein verwendeten Dreiphasensystem die allgemeine Grundform eines gleichschenkligen Dreiecks aufweist.

21. Tachogenerator nach einem der Ansprüche 1 bis 20, dadurch gekennzeichnet, daß die von mindestens einem der induktiven Sender/Empfängerkopfpaarungen abgegebene Hüllkurve gleichzeitig als Kommutierungshilfslinie für die Ansteuerung der verschiedenen Spulen der antreibenden Maschine (über einen Stromerreger) verwendet ist mit der Maßgabe, daß bei erforderlichen Abweichungen von einer sinusförmigen Kommutierungskennlinie die die Hüllkurvenform bestimmenden Kurvenscheibe (22) eine entsprechend dem aktuellen Kommutierungskennlinienverlauf angepaßte Form aufweist.

Fig.1

23
23
11
24
24
10
15
S N
14
N S
15
12'
13
23
12

Fig.3

Amplit.

B
A
I
B'
II
III

t

t₁
t₂
t₃

Fig. 2

Fig. 2a

Fig.4

Fig.5a

Fig.5b